# EUROPÄISCHE PATENTSCHRIFT

(11) **EP 2 768 895 B1**
(45) Veröffentlichungstag und Bekanntmachung des Hinweises auf die Patenterteilung: **30.12.2015**
(21) Anmeldenummer: 12775474.5
(22) Anmeldetag: 15.10.2012
(51) Int. Cl.: C08K 3/00, C08K 3/04, C08K 3/38, C08K 5/00, C08L 69/00

(54) **POLYMER-ZUSAMMENSETZUNG MIT WÄRME-ABSORBIERENDEN EIGENSCHAFTEN**
POLYMER COMPOUND WITH HEAT ABSORBING CHARACTERISTICS
COMPOSITION DE POLYMÈRE DOTÉE DE PROPRIÉTÉS ABSORBANT LA CHALEUR

(30) Priorität: 18.10.2011 EP 11185674
(43) Veröffentlichungstag der Anmeldung: 27.08.2014
(73) Patentinhaber: Covestro Deutschland AG, 51373 Leverkusen (DE)
(72) Erfinder: ERKELENZ, Michael, 47239 Duisburg (DE); WEHRMANN, Rolf, 47800 Krefeld (DE); BOUMANS, Anke, 47574 Goch (DE)
(74) Vertreter: Levpat
(86) Internationale Anmeldenummer: PCT/EP2012/070423
(87) Internationale Veröffentlichungsnummer: WO 2013/057074

(56) Entgegenhaltungen:
- EP-A1- 1 865 027
- EP-A1- 2 009 057
- WO-A1-2008/134517
- WO-A1-2012/080395
- WO-A2-2007/008476
- US-A1- 2011 144 250

## Beschreibung

Die Erfindung betrifft Polymerzusammensetzungen zur Herstellung von Formteilen, insbesondere Brillen und Sichtschutzvorrichtungen, die den Vorgaben der EN 169 (Schweisserschutznorm) sowie der EN 1836/2005 (Signallichterkennung) genügen.

Die Zusammensetzungen und Formteile sind insbesondere bei Verarbeitungstemperaturen oberhalb von 265°C verarbeitbar, recyclebar und weisen eine Kerbschlagzähigkeit von mindestens 65 kJ/cm² auf, wobei sie die geforderten oben genannten optischen Normen erfüllen.

Darüber hinaus sind die Zusammensetzungen in verschiedenen Farbtönen darstellbar und leichter lackierbar als bekannte Zusammensetzungen.

Darüber hinaus betrifft die vorliegende Erfindung die Verwendung der Polymerzusammenstzungen zur Herstellung von Formteilen, insbesondere Brillen und Sichtschutzvorrichtungen, die den Vorgaben der EN 169 (Schweisserschutznorm) genügen, sowie ein Verfahren zur Herstellung der Formteile.

Aus dem Stand der Technik sind Zusammensetzungen bekannt, die die o.g. Norm erfüllen, jedoch weisen diese nur eine geringere Temperaturstabilität, insbesondere bei der Verarbeitung, dadurch bedingt fehlende Wiederverwertbarkeit, sowie eine geringere Kerbschlagzähigkeit auf. Ferner ist bei den aus dem Stand der Technik bekannten Zusammensetzungen die Signallichterkennung nur unzureichend, d.h. Signalfarben im sichtbaren Bereich des Spektrums werden verfälscht oder sind nicht mehr als solche zu erkennen.

Die Aufgabe der vorliegenden Erfindung war es daher, Polymerzusammensetzungen bereitszustellen, die die Nachteile der aus dem Stand der Technik bekannten Zusammensetzungen nicht aufweisen, insbesondere Zusammensetzungen mit hoher Verarbeitungstemperatur, hoher Kerbschlagzähigkeit, guter Einfärbbarkeit und guter Wiederverwertung, die eine gute Signallichterkennung gewährleisten.

Die Wiederverwertung der Materialien ist hierbei nicht nur für die Rückführung von Ausschußware interessant, sondern auch aufgrund der anwendungsbedingt relativ kurzen Lebensdauer des Formteils.

Gegenstand der Erfindung sind thermoplastische Formmassen enthaltend
A) 73,9750 bis 99,9948 Gew.-%, vorzugsweise 85,00 Gew.% bis 99,90 Gew.-%, besonders bevorzugt 95,00 bis 98,00 Gew.-% mindestens eines transparenten thermoplastischen Kunststoffs, bevorzugt Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona) weiter bevorzugt Polycarbonat, Copolycarbonat, Polyestercarbonat, aromatische Polyester oder Polymethylmethacrylat, oder Mischungen der genannten Komponenten, und besonders bevorzugt Polycarbonat und Copolycarbonat, wobei der transparente thermoplastische Kunststoff besonders bevorzugt in einer Menge zugegeben wird, daß diese mit den Komponenten b) bis k) 100 Gew.-% ergibt.
B) 0,05 bis 0,50 Gew.-%, vorzugsweise 0,10 bis 0,45 Gew.-%, besonders bevorzugt 0,20 bis 0,40 Gew.-% mindestens eines UV-Stabilisators.
C) 0 Gew.-Teile bis 1,00 Gew.-Teile, weiter bevorzugt 0,05 Gew.-Teile bis 0,75 Gew.-Teile, besonders bevorzugt 0,15 Gew.-Teile bis 0,60 Gew.-Teile, und ganz besonders bevorzugt 0,20 Gew.-Teile bis 0,50 Gew.-Teile mindestens eines Entformungsmittels.
D) 0,0001 bis 0,500 Gew.-%, bevorzugt 0,0004 bis 0,2000 Gew.-%, besonders bevorzugt 0,0006 bis 0,1000 Gew.-% mindestens eines anorganischen IR-Absorbers, ausgewählt aus mindestens einem Wolframat oder einer Mischung mindestens eines Borids und mindestens eines Wolframats.
E) 0,0001 bis 0,01 Gew.-%, bevorzugt 0,0001 bis 0,0080 Gew.-%, besonders bevorzugt 0,0003 bis 0,0060 Gew.-% mindestens eines organischen IR-Absorbers aus der Gruppe der Quaterylene, Perylene, Phthalocyanine und Naphthalocyanine.
F) 0,0001 bis 0,0150 Gew.-%, bevorzugt 0,0001 bis 0,0130 Gew.-%, besonders bevorzugt 0,0002 bis 0,0120 Gew.-% Ruß.
G) 0 bis 1,0 Gew.-%, bevorzugt 0,01 bis 0,50 Gew.-%, besonders bevorzugt 0,02 bis 0,11 Gew.-% mindestens eines Thermostabilisators.
H) 0 bis 7,0 Gew.-% mindestens eines Flammschutzmittels.
I) 0 - 15,00 Gew.-%, bevorzugt 0,05 - 5,0 Gew.-%, besonders bevorzugt 0,1 - 1,0 Gew.-% weitere Additive.
K) 0,0001 bis 1,000 Gew.-%, bevorzugt 0,0002 bis 0,50 Gew.-%, besonders bevorzugt 0,0004 bis 0,2000 Gew.% mindestens ein organisches Farbmittel oder organische Farbmittelkomplexe,
wobei die Menge der Komponenten A bis K sich zu 100 Gew.-% addiert.

### Komponente A)

Transparente thermoplastische Kunststoffe im Sinne der Erfindung sind Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona).

Auch Mischungen von mehreren transparenten thermoplastischen Polymeren, sofern sie transparent miteinander mischbar sind, sind möglich, wobei eine Mischung aus Polycarbonat mit PMMA (weiter bevorzugt mit PMMA < 2 Gew.%) oder Polyester bevorzugt ist.

Eine spezielle Ausführungsform enthält in diesem Zusammenhang eine Mischung aus Polycarbonat und PMMA mit weniger als 2,0%, vorzugsweise weniger als 1,0%, weiter bevorzugt weniger als 0,5%, wobei mindestens 0,01 % PMMA enthalten sind bezogen auf die Menge Polycarbonat, wobei das PMMA bevorzugt ein Molgewicht <40.000 g/mol aufweist. In einer besonders bevorzugten Ausführungsform beträgt der Anteil an PMMA 0,2% und besonders bevorzugt 0,1% bezogen auf die Menge Polycarbonat, wobei das PMMA bevorzugt ein Molgewicht <40.000 g/mol aufweist.

Eine weitere spezielle Ausführungsform enthält eine Mischung aus PMMA und Polycarbonat mit weniger als 2%, vorzugsweise weniger als 1%, weiter bevorzugt weniger als 0,5%, noch weiter bevorzugt mit 0,2% und besonders bevorzugt 0,1% Polycarbonat bezogen auf die Menge PMMA.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Polycarbonate im Sinn der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R Müller, H. Nouvertne', BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in BeckerBraun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-düsoprapylbenzole, Phtalimidine abgeleitet von Isatin- oder Phenolphthaleinderivaten sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hdydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, Cumylphenol, p-n-Octylphenol, p-isoOctylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Bevorzugte Kettenabbrecher sind ferner die Phenole welche ein oder mehrfach mit C1 bis C30-Alkylresten, linear oder verzweigt, bevorzugt unsubstituiert oder mit tert.-Butyl substituiert sind.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die aromatischen Polycarbonate der vorliegenden Erfindung besitzen Gewichtsmittelmolekulargewichte Mw (ermittelt durch Gelpermeationschromatographie und Eichung mit Polycarbonateichung) zwischen 5000 und 200.000, vorzugsweise zwischen 10.000 und 80.000 und besonders bevorzugt zwischen 15.000 und 40.000

Die erfindungsgemäßen Polymer-Zusammensetzungen können neben den erfindungsgemäßen Komponenten optional noch weitere übliche Polymeradditive enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Flammschutzmittel, optische Aufheller oder Fließverbesserer in den für die jeweiligen Thermoplasten üblichen Mengen.

Bevorzugt werden die weiteren Polymeradditive in Mengen von 0,0 Gew.-% bis zu 5,0 Gew.-%, weiter bevorzugt 0,01 Gew.-% bis 1,00 Gew.-%, jeweils bezogen auf die Menge der jeweiligen Polymer-Gesamtzusammensetzungen. Auch Mischungen mehrerer Zusatzstoffe sind geeignet.

### Komponente B)

UV-Stabilisatoren im Sinne der vorliegenden Erfindung besitzen eine möglichst geringe Transmission unterhalb 400 nm und eine möglichst hohe Transmission oberhalb von 400 nm. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, BASF, Ludwigshafen), 2-(5-chloro-2-H-Benzotriazol-2-yl)-6-(1,1-dimethylethyl)-4-methyl-phenol (Tinuvin® 326, BASF, Ludwigshafen), 2-(2'-Hydroxy-5'-(tert.-octyl)-phenyl)-benzotriazol (Tinuvin® 329, BASF, Ludwigshafen), 2-(2'-Hydroxy-3'-(2-butyl)-5'-(tert.butyl)-phenyl)-benzotriazol (Tinuvin® 350, BASF, Ludwigshafen), Bis-(3-(2H-benztriazolyl)-2-hydroxy-5-tert.-octyl)methan, (Tinuvin® 360, BASF, Ludwigshafen), (2-(4,6-diphenyl-1,3,5-triazin-2-yl)-5-(hexyloxy)-phenol (Tinuvin® 1577, BASF, Ludwigshafen), sowie der Benzophenone 2,4-Dihydroxy-benzophenon (Chimasorb® 22 , BASF, Ludwigshafen) und 2-Hydroxy-4-(octyloxy)-benzophenon (Chimassorb® 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul® 3030, BASF AG Ludwigshafen), 2-[2-hydroxy-4-(2-ethylhexyl)oxy]phenyl-4,6-di(4-phenyl)phenyl-1,3,5-triazine (CGX UVA 006, BASF, Ludwigshafen) oder Tetra-ethyl-2,2'-(1,4-phenylene-dimethylidene)-bismalonate (Hostavin® B-Cap, Clariant AG).

Besonders bevorzugte spezielle UV-Stabilisatoren sind beispielsweise Tinuvin® 360, Tinuvin® 350, Tinuvin® 329, Tinuvin® 326, Hostavin® B-CAP, besonders bevorzugt hieraus Tinuvin® 329, 326 und 360 sowie Mischungen daraus.

Es können auch Mischungen dieser Ultraviolett-Absorber eingesetzt werden.

### Komponente C)

Die optional verwendeten Entformungsmittel C) sind Ester aliphatischer langkettiger Carbonsäuren mit ein- oder mehrwertigen aliphatischen und/oder aromatischen Hydroxyverbindungen. Besonders bevorzugt verwendete aliphatische Carbonsäureester sind Verbindungen der allgemeinen Formel (III):

**(R₄CO-O)ₒ-R₅-(OH)ₚ mit o = 1 bis 4 und p = 3 bis 0** **(III)**

wobei R4 ein aliphatischer gesättigter oder ungesättigter, linearer, cyclischer oder verzweigter Alkylrest ist und R5 ein Alkylenrest eines 1- bis 4-wertigen aliphatischen Alkohols R5-(OH)o+p ist.

Besonders bevorzugt für R4 sind C1-C18 Alkylreste. C1-C18-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbu- tyl, 3-Methylbutyl, neo-Pentyl, 1-Ethylpropyl, Cyclohexyl, Cyclopentyl, n-Hexyl, 1,1-Di- methylpropyl, 1 ,2-Dimethylpropyl, 1 -Methylpentyl, 2-Methylpentyl, 3 -Methylpentyl, 4-Methylpentyl, 1,1-Dimethylbutyl, 1 ,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Alkylen steht für einen geradkettigen, zyklischen, verzweigten oder unverzweigten C1-C18 Alkylen-Rest. Cl-C18-Alkylen steht beispielsweise für Methylen, Ethylen, n-Propylen, isoPropylen, n-Butyen, n-Pentylen, n-Hexylen, n-Heptylen, n-Octylen, n-Nonylen, n-Decylen, n-Dodecylen, n-Tridecylen, n-Tetradecylen, n-Hexadecylen oder n-Octadecylen.

Bei Estern von mehrwertigen Alkoholen können auch freie, nicht veresterte OH-Gruppen vorhanden sein. Erfindungsgemäß geeignete aliphatische Carbonsäureester sind z.B.: Glycerinmonostearat, Palmitylpalmitat, und Stearylstearat. Es können auch Gemische verschiedener Carbonsäureester der Formel (III) eingesetzt werden. Bevorzugt verwendete Carbonsäureester sind Ester von Pentaerythrit, Glycerin, Trimethylolpropan, Propandiol, Stearylalkohol, Cetylalkohol oder Myristylalkohol mit Myristin-, Palmitin-, Stearin- oder Montansäure und Gemische daraus. Besonders bevorzugt sind Pentaerythrittetrastearat, Glycerinmonostearat, Stearylstearat und Propandioldistearat, bzw. Gemische, daraus und am stärksten bevorzugt Pentaerythrittetrastearat.

### Komponente D)

Als anorganische IR-Absorber haben sich Materialien auf Basis feinteiliger Boride, wie z.B. Lanthanhexaborid, etabliert, da sie über eine breite Absorptionsbande verfügen. Derartige Boride auf Basis von La, Ce, Pr, Nd, Tb, Dy, Ho, Y, Sm, Eu, ER, Tm, Yb, Lu, Sr, Ti, Zr, Hf, V, Ta, Cr, Mo, W und Ca sind z.B. in DE 10392543 oder EP 1 559 743 beschrieben.

Ferner sind IR-absorbierende Additive aus der Gruppe der Wolframverbindungen bekannt, die über eine im Vergleich zu den aus dem Stand der Technik bekannten anorganischen IR-Absorbern auf Borid-Basis geringere Eigenabsorption im sichtbaren Spektralbereich verfügen, wobei insbesondere Zink-dotierte Wolframverbindungen mit erhöhter Langzeitstabilität bevorzugt verwendet werden.

Unter den anorganischen IR-Absorbern sind insbesondere Lanthanhexaborid und Cäsiumwolframate sowie Zinkdotierte Cäsiumwolframate bevorzugt.

Die Herstellung und der Einsatz dieser Absorber in thermoplastischen Materialien beispielsweise in H. Takeda, K. Adachi, J. Am. Ceram. Soc. 90, 4059 - 4061, (2007), WO 2005037932, JP 2006219662, JP 2008024902, JP 2008150548, WO 2009/059901 und JP 2008214596 beschrieben.

Bevorzugt handelt es sich bei IR-Absorbern auf Wolframatbasis um IR Absorber vom Typ
b1) WyOz (W = Wolfram, O = Sauerstoff; z/y = 2,20 - 2,99) und/oder
b2) MxWyOz (M = H, He, Alkali metall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1,000; z/y = 2,2-3,0), wobei als M die Elemente H, Cs, Rb, K, Tl, In, Ba, Li, Ca, Sr, Fe und Sn bevorzugt sind, wobei hiervon Cs ganz besonders bevorzugt ist. Besonders bevorzugt sind Ba_{0,33}WO₃, Tl_{0,33}WO₃, K_{0,33}WO₃, Rb_{0,33}WO₃, CS_{0,33}WO₃, Na_{0,33}WO₃, Na_{0,75}WO₃, sowie deren Gemische. In einer besonderen Ausführungsform der vorliegenden Erfindung ist die alleinige Verwendung von Cs_{0,33}WO₃ als anorganischem IR Absorber ganz besonders bevorzugt. Ebenfalls bevorzugt sind Cs/W-Verhältnisse von 0,20 und 0,25, wobei die vorgenannten Wolframverbindungen vom Typ b1) und b2) nachfolgend als Wolframate bezeichnet werden;

In einer weiteren bevorzugten Ausführungsform mit dotierten Wolframaten handelt es sich um Substanzen vom Typ

Zn_{w}MxWyOz (M = mindestens ein Element ausgewählt aus der Gruppe bestehend aus H, He, Alkali metall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1,000; z/y = 2,2-3,0; w = 0,001 - 0,015), wobei als M die Elemente H, Cs, Rb, K, Tl, In, Ba, Li, Ca, Sr, Fe und Sn bevorzugt sind, wobei hiervon Cs ganz besonders bevorzugt ist. Weiterhin besonders bevorzugt ist Zink-dotiertes Ba_{0,33}WO₃, Tl_{0,33}WO₃, K_{0,33}WO₃, Rb_{0,33}WO₃, CS_{0,33}WO₃, Na_{0,33}WO₃, Na_{0,75}WO₃, sowie deren Gemische.

Kommen IR-Absorber auf Borid-basis zum Einsatz, so sind nanoskalige anorganische IR-Absorber Partikel auf Boridbasis bevorzugt, vorzugsweise ein Metallborid, wobei das Metall ausgewählt aus der Gruppe der folgenden Elemente La, Ce, Pr, Nd, Tb, Dy, Ho, Y, Sm, Eu, ER, Tm, Yb, Lu, Sr, Ti, Zr, Hf, V, Ta, Cr, Mo, W und Ca. Die Form des Hexaborids ist besonders bevorzugt. Insbesondere bevorzugt sind Lanthanhexaborid (LaB₆), Praseodymiumborid (PrB₆), Neodymiumborid (NdB₆), Ceriumborid (CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB and CrB₂), Molybdänborid (MoB₂, Mo₂B₅ and MoB), Wolframborid (W₂B₅), oder Kombinationen dieser Boride. Ganz besonders bevorzugt sind Boride auf Basis von Lanthanhexaborid (LaB₆) oder Mischungen enthaltend Lanthanhexaborid.

Der Partikeldurchmesser(ermittelt durch TEM / Transmissionselektronenmikroskopie) von anorganischen IR-Absorbern ist vorzugsweise kleiner als 200 nm, weiter bevorzugt kleiner als 100 nm und stärker bevorzugt kleiner als 50 nm, wobei der Partikeldurchmesser jeweils bevorzugt größer als 5 nm, weiter bevorzugt größer als 10 nm ist. In einer besonders bevorzugten Ausführungsform ist der durchschnittliche Teilchendurchmesser zwischen 15 nm bis 25 nm. Die Partikel sind im sichtbaren Bereich des Spektrums durchlässig, wobei durchlässig bedeutet, dass die Absorption dieser IR-Absorber im sichtbaren Bereich des Lichts verglichen mit der Absorption im IR-Bereich gering ist und der IR-Absorber zu keiner deutlich erhöhten Trübung oder deutlichen Verminderung der Transmission (im sichtbaren Bereich des Lichts) der Zusammensetzung oder dem jeweiligen Endprodukt führt.

Die Oberfläche der Partikel kann behandelt sein. So kann die Oberfläche mit einem Silan behandelt oder mit einer Titan-basierten, Zirkonium-basierten Schicht oder ähnlichen Schichten versehen sein. Durch diese Behandlung kann die Widerstandsfähigkeit gegen Feuchtigkeit erhöht werden. Diese Art von Beschichtung erhöht die Langzeitstabilität bezüglich der IR-Absorption und ist z.B. in US20050161642 beschrieben. In einer bevorzugten Ausführungsform sind die IR-Absorber-Partikel auf Borid oder Wolframatbasis mit Titannitrid beschichtet.

In der vorliegenden Erfindung werden die feinteiligen IR-Absorber Partikel vorzugsweise in Form einer Dispersion in die Polymermatrix eingebracht. Diese Dispersion verhindert die Reaglomeration und erleichtert die Einarbeitung in eine thermoplastische Matrix wie z.B. Polycarbonat. Polymerartige Dispergiermittel werden bevorzugt eingesetzt. Geeignete Polymer-basierte Dispergiermittel sind vor allem Dispergiermittel, die eine hohe Lichttransmission aufweisen, wie z.B. Polyacrylate, Polyurethane, Polyether oder Polyester sowie davon abgeleitete Polymere. Als Dispergiermittel bevorzugt sind Polyacrylate, Polyether und Polyester-basierte Polymere. Bevorzugt werden hochtemperaturstabile Dispergiermittel eingesetzt.

Zur Herstellung der erfindungsgemäßen anorganischen IR-Absorber Nanopartikel kann der IR-Absorber mit den unten beschriebenen Dispergiermitteln und weiteren organischen Lösemitteln, wie z.B. Toluol, Benzol oder ähnliche aromatische Kohlenwasserstoffe vermischt und in geeigneten Mühlen, wie z.B. Kugelmühlen, unter Zugabe von Zirkoniumoxid (z.B. mit einem Durchmesser von 0,3 mm) gemahlen werden, um die gewünschte Partikelgrößenverteilung herzustellen. Man erhält die Nanopartikel in Form einer Dispersion. Nach Mahlung können gegebenenfalls weitere Dispergiermittel zugesetzt werden. Das Lösungsmittel wird bei erhöhten Temperaturen und reduziertem Druck entfernt.

Die Größe der Partikel kann mit Hilfe der Transmissionselektronenspektroskopie (TEM) bestimmt werden. Derartige Messungen an IR-Absorber-Nanopartikeln sind z.B. in Adachi et al., J. Am. Ceram. Soc. 2008, 91, 2897-2902, beschrieben.

Für den Einsatz in transparenten Thermoplasten werden die so erhaltenen Partikel in einer organischen Matrix dispergiert, z.B. in einem Acrylat, und ggf. wie oben beschrieben in einer Mühle unter Verwendung geeigneter Hilfsstoffe wie z.B. Zirkoniumdioxid und ggf. unter Verwendung von organischen Lösungsmitteln wie zum Beispiel Toluol, Benzol oder ähnlichen Kohlenwasserstoffen gemahlen.

Geeignete Polymer-basierte Dispergiermittel sind vor allem Dispergiermittel, die eine hohe Lichttransmission aufweisen, wie z.B. Polyacrylate, Polyurethane, Polyether, Polyester oder Polyesterurethane sowie davon abgeleitete Polymere.

Als Dispergiermittel bevorzugt sind Polyacrylate, Polyether und Polyester-basierte Polymere, wobei als hochtemperaturstabile Dispergiermittel Polyacrylate wie z.B. Polymethylmethacrylat oder Polymethylacrylat (zusammen benannt als Polymethyl(meth)acrylat) und Polyester besonders bevorzugt sind. Es können auch Mischungen dieser Polymere oder auch Copolymere auf Acrylatbasis eingesetzt werden. Derartige Dispergierhilfsmittel und Methoden zur Herstellung von Wolframatdispersionen sind z.B. in der JP 2008214596 sowie in Adachi et al. J. Am. Ceram. Soc. 2007, 90 4059- 4061, beschrieben.

Für die vorliegende Erfindung geeignete Dispergiermittel sind kommerziell erhältlich. Insbesondere sind Dispergiermittel auf Polyacrylat-Basis geeignet. Derart geeignete Dispergiermittel sind z.B. unter den Handelsnamen EFKA^{®}, z.B. EFKA^{®} 4500 und EFKA^{®} 4530 bei BASF Ludwigshafen erhältlich. Polyesterhaltige Dispergiermittel sind ebenfalls geeignet. Sie sind beispielsweise unter den Handelsnamen Solsperse^{®}, z.B. Solsperse^{®} 22000, 24000SC, 26000, 27000 von Avecia erhältlich. Ferner sind polyetherhaltige Dispergiermittel z.B. unter den Handelsnamen Disparlon^{®} DA234 und DA325 der Firma Kusumoto Chemicals bekannt. Auch Polyurethan basierte Systeme sind geeignet. Polyurethan-basierte Systeme sind unter dem Handelsnamen EFKA^{®} 4046, EFKA^{®} 4047 von BASF Ludwigshafen erhältlich. Texaphor^{®} P60 und P63 sind entsprechende Handelsnamen der Cognis.

Die Menge des IR-Absorbers im Dispergiermittel beträgt 0,2 Gew.-% bis 80,0 Gew-%, bevorzugt 1,0 Gew.% - 40,0 Gew-%, weiter bevorzugt 5 Gew-% - 35 Gew-%, und am stärksten bevorzugt 10 Gew-% - 30 Gew-% bezogen auf die erfindungsgemäß eingesetzte Dispersion des anorganischen IR-Absorbers. In der Gesamtzusammensetzung der gebrauchsfertigen IR-Absorberformulierung können neben dem IR-Absorber-Reinstoff und dem Dispergiermittel noch weitere Hilfsstoffe wie zum Beispiel Zirkoniumdioxid sowie Restlösemittel wie zum Beispiel Toluol, Benzol oder ähnliche aromatische Kohlenwasserstoffe enthalten sein.

Besonders bevorzugt werden Mischungen von LaB₆ mit Cäsiumwolframat eingesetzt.

Das Verhältnis von LaB₆ zu Cäsiumwolframat ist vorzugsweise von 1:6 bis 1:12, weiter bevorzugt von 1:8 bis 1:10.

Die Verhältnisse sind jeweils bezogen auf den Feststoffanteil des reinen IR-Absorbers.

### Komponente E)

Geeignete zusätzliche organische Infrarot-Absorber sind nach Stoffklassen z.B. in M. Matsuoka, Infrared Absorbing Dyes, Plenum Press, New York, 1990 beschrieben.

Davon sind Quaterylene, Perylene, Phthalocyanine und Naphthalocyanine geeignet.

Aufgrund der verbesserten Löslichkeit in Thermoplasten sind Phthalocyanine und Naphthalocyanine mit sterisch anspruchsvollen Seitengruppen vorzuziehen, wie beispielsweise Phenyl, Phenoxy, Alkylphenol, Alkylphenoxy, tert-Butyl, (-S-Phenyl), -NH-Aryl, -NH-Alkyl und ähnliche Gruppen.

Insbesondere bevorzugt ist Lumogen IR 765 (CAS-No. 943969-69-5; EG Nr. 454-270-3), Lumogen IR 788 (EG Nr. 451-660-5 / CAS-Nr. 333304-54-4) der BASF Ludwigshafen sowie Excolor HA 1 ((Octaanilinooctafluorophthalocyanato) oxovanadium) der Nippon Shokubai.

### Komponente F)

Ruß gemäß der vorliegenden Erfindung ist ein schwarzer pulverförmiger Feststoff, der je nach Qualität und Verwendung im wesentlichen aus Kohlenstoff besteht. Der Kohlenstoffgehalt von Ruß liegt im Allgemeinen bei 80,0 bis 99,9 Gew.-%. Bei nicht oxidativ nachbehandelten Rußen beträgt der Kohlenstoffgehalt bevorzugt 96,0 bis 95,5 Gew.-%. Durch Extraktion des Rußes mit organischen Lösungsmitteln, beispielsweise mit Toluol, können Spuren organischer Verunreinigungen auf dem Ruß entfernt werden und dadurch der Kohlenstoffgehalt auch auf größer als 99,9 Gew.-% erhöht werden. Bei oxidativ nachbehandelten Rußen kann der Sauerstoffgehalt bis zu 30 Gew.-%, bevorzugt bis zu 20 Gew.-%, insbesondere 5 bis 15 Gew.-% betragen.

Ruß besteht aus meist kugelförmigen Primärpartikeln mit einer Größe von bevorzugt 10 bis 500 nm. Diese Primärpartikeln sind zu kettenförmigen oder verzweigten Aggregaten zusammengewachsen. Bei den Aggregaten handelt es sich im Allgemeinen um die kleinste in einem Dispergierungsverfahren zerteilbare Einheit des Rußes. Viele dieser Aggregate lagern sich wiederum durch intermolekulare (van-der-Waalssche) Kräfte zu Agglomeraten zusammen. Durch Variation der Herstellbedingungen können sowohl die Größe der Primärteilchen als auch deren Aggregierung (Struktur) gezielt eingestellt werden. Unter Struktur versteht der Fachmann dabei die Art der dreidimensionalen Anordnung der Primärpartikel in einem Aggregat. Von einer "hohen Struktur" spricht man bei Rußen mit stark verzweigten und vernetzten Aggregatstrukturen; bei weitgehend linearen, das heißt wenig verzweigten und vernetzten Aggregatstrukturen spricht man dagegen von "niedriger Struktur".

Als ein Maß für die Struktur eines Rußes wird im Allgemeinen die Öl-Adsorptions-Zahl gemessen nach ISO 4656 mit Dibutylphthalat (DBP) angegeben. Dabei ist eine hohe (Ol-Adsorptions-Zahl ein Indikator für eine hohe Struktur.

Die Primärpartikelgröße eines Rußes lässt sich beispielsweise mittels Rasterelektronenmikroskopie ermitteln. Als ein Maß für die Primärpartikelgröße eines Rußes dient aber auch die BET-Oberfläche des Rußes bestimmt nach ISO 4652 mit Stickstoffadsorption. Dabei ist eine hohe BET-Oberfläche ein Indikator für eine kleine Primärpartikelgröße.

Die Dispergierbarkeit der Agglomerate eines Rußes hängt von der Primärpartikelgröße und der Struktur der Aggregate ab, wobei mit abnehmender Primärpartikelgröße und abnehmender Struktur die Dispergierbarkeit des Rußes in der Regel abnimmt.

Als technisches Produkt wird Industrieruß durch unvollständige Verbrennung oder Pyrolyse von Kohlenwasserstoffen hergestellt. Verfahren zur Herstellung von Industrieruß sind literaturbekannt. Bekannte Verfahren zur Herstellung von Industrierußen sind insbesondere das Furnace-, Gasruß-, Flammruß-, Acetylenruß- und Thermalruß-Verfahren.

Die Partikelgrößenverteilung der Primärteilchen sowie die Größe und Struktur der Primärteilchenaggregate bestimmen die Eigenschaften wie Farbtiefe, Grundton und Leitfähigkeit des Rußes. Leitruße besitzen dabei in der Regel kleine Primärteilchen und weitverzweigte Aggregate. Farbruße sind in der Regel Ruße mit sehr kleinen Primärpartikeln und werden oft nach der Herstellung nach einem der zuvor genannten Prozesse einer nachträglichen Oxidation unterzogen. Die dadurch auf die Rußoberfläche aufgebrachte oxidischen Gruppen sollen dabei die Verträglichkeit mit den Harzen, in denen die Farbruße eingebracht und dispergiert werden sollen, erhöhen.

Es kommen bevorzugt Farbruße zum Einsatz. In bevorzugter Ausführungsform besitzen diese eine mittlere Primärpartikelgröße bestimmt durch Rasterelektronenmikroskopie von weniger als 100 nm bevorzugt von 10 bis 99 nm, weiter bevorzugt von 10 bis 50 nm, besonders bevorzugt von 10 bis 30 nm, insbesondere von 10 bis 20 nm. Die besonders feinteiligen Farbruße sind daher im erfindungsgemäßen Verfahren besonders bevorzugt, da die mit einer bestimmten Menge an Ruß erzielbare Farbtiefe und UV-Beständigkeit mit abnehmender Primärpartikelgröße zunimmt, andererseits aber auch deren Dispergierbarkeit abnimmt, weswegen insbesondere solche feinstteiligen Ruße einer Verbesserung in Bezug auf die Dispergierbarkeit bedürfen.

Die bevorzugt zum Einsatz kommenden Farbruße besitzen eine BET-Oberfläche bestimmt nach ISO 4652 durch Stickstoffadsorption von bevorzugt mindestens 20 m²/g, weiter bevorzugt von mindestens 50 m²/g, besonders bevorzugt von mindestens 100 m²/g, insbesondere von mindestens 150 m²/g.

Bevorzugt zum Einsatz kommende Farbruße sind darüber hinaus charakterisiert durch eine Öl-Adsorptions-Zahl gemessen nach ISO 4656 mit Dibutylphthalat (DBP) von bevorzugt 10 bis 200 ml/100g, weiter bevorzugt von 30 bis 150 ml/100g, besonders bevorzugt von 40 bis 120 ml/100g, insbesondere von 40 bis 80 ml/100g. Die Farbruße mit niedriger Öl-Adsorptions-Zahl erzielen in der Regel eine bessere Farbtiefe und sind insofern bevorzugt, lassen sich aber andererseits im Allgemeinen schwieriger dispergieren, weswegen insbesondere solche Ruße einer Verbesserung in Bezug auf die Dispergierbarkeit bedürfen.

Die zum Einsatz kommenden Ruße können und werden bevorzugt in pelletisierter oder geperlter Form eingesetzt. Die Perlung beziehungsweise Pelletisierung erfolgt dabei nach literaturbekannten Verfahren und dient einerseits der Erhöhung der Schüttdichte und der besseren Dosier(Fließ)eigenschaften, andererseits aber auch der Arbeitshygiene. Die Pellets beziehungsweise Perlen werden dabei in ihrer Härte bevorzugt so eingestellt, dass sie zwar Transport und Förderprozesse bei der Dosierung weitgehend unbeschadet überstehen, andererseits jedoch bei Einwirkung größerer mechanischer Scherkräfte, wie sie beispielsweise in handelsüblichen Pulvermischgeräten und/oder Compoundieraggregaten wirken, wieder vollständig in die Agglomerate zerscheren.

Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS®, als nass-verarbeitete Pellets unter den Namen ELFTEX®, REGAL® und CSX®, und in einer flockigen Erscheinungsform unter MONARCH®, ELFTEX®, REGAL® und MOGUL® - alle erhältlich von Cabot Corporation.

Insbesondere bevorzugt sind Ruße, die unter dem Handelsnamen BLACK PEARLS® (CAS-Nr. 1333-86-4) gehandelt werden.

Ruße im Rahmen der vorliegenden Erfindung sind neben ihrer farbgebenden Wirkung auch als IR-Absorber zu verstehen.

Die IR-Absorber, insbesondere bevorzugt anorganische IR-Absorber können auch in Form von Gemischen untereinander verwendet werden. So sind im Falle von Mischungen Zusammensetzungen bevorzugt, die zwei bis einschließlich fünf, und besonders bevorzugt zwei oder drei, unterschiedliche IR-Absorber enthalten.

Die IR-Absorber können so zusammengestellt werden, daß ein maximaler Absorptionsbereich durch die Maxima der einzelnen IR-Absorber abgedeckt wird.

Diese Konzentrationen finden vorzugsweise Anwendung für Fertigteile mit Dicken von 0,5 mm - 8 mm, bevorzugt 0,8 mm - 6,0 mm, und besonders bevorzugt 1,0 mm - 4,0 mm.

In weiteren besonderen Ausfuhrungsformen, insbesondere für Anwendungen bei Schienen- und Luftfahrzeugen, kann die Dicke der Verscheibungen auch mehr als 8 mm, vorzugsweise 9 mm - 15 mm betragen, wobei hierbei die Konzentration der entsprechenden IR-Absorber und Stabilisatoren entsprechend angepaßt wird.

In einer weiteren bevorzugten Ausführungsform weist der/die zusätzliche(n) IR-Absorber ein von dem eingesetzten Borid oder Wolframat unterschiedliches Absorptionsspektrum bezogen auf die Absorptionsmaxima auf, so daß ein maximaler Absorptionsbereich durch die Maxima abgedeckt wird.

### Komponeten G)

Die Zusammensetzungen der vorliegenden Erfindung enthalten weiterhin mindestens einen Thermostablisator ausgewählt aus der Gruppe, die Stabilisatoren auf Phosphinbasis, Stabilisatoren auf Phosphitbasis und Stabilisator aus der Gruppe der phenolischen Antioxidantien umfaßt.

Hinsichtlich der Auswahl der Phosphine liegen keine Beschränkungen vor, wobei die Phosphinverbindungen bevorzugt aus der Gruppe ausgewählt sind, die aliphatische Phosphine, aromatische Phosphine und aliphatisch-aromatische Phosphine umfasst.

Die Phosphinverbindungen können primäre, sekundäre und tertiäre Phosphine sein. Bevorzugt werden tertiäre Phosphine eingesetzt, wobei aromatische Phosphine besonders bevorzugt und tertiäre aromatische Phosphine ganz besonders bevorzugt sind.

In einer bevorzugten Ausführungsform der vorliegenden Erfindung werden Triphenylphosphin (TPP), Trialkylphenylphosphin, Bisdiphenylphosphinoethan oder ein Trinaphthylphosphin sowie Irgaphos 168 , wovon Triphenylphosphin (TPP) ganz besonders bevorzugt ist, oder Mischungen dieser Phosphine eingesetzt.

Grundsätzlich können Mischungen aus verschiedenen Phosphinen eingesetzt werden.

Die Herstellung und Eigenschaften von Phosphinverbindungen sind dem Fachmann bekannt und beispielsweise in der EP-A 0 718 354 und "Ullmanns Enzyklopädie der Technischen Chemie", 4. Aufl., Bd. 18, S. 378-398 und Kirk-Othmer, 3. Aufl., Bd. 17, S. 527-534 beschrieben.

Bei der Einsatzmenge der Phosphinverbindung in der Stabilisatormischung ist zu berücksichtigen, dass unter bestimmten Verarbeitungsbedingungen in Abhängigkeit von Temperatur und Verweilzeit die Substanz oxidiert wird. Der oxidierte Anteil steht nicht mehr zur Stabilisierung der eingesetzten IR-Absorber zur Verfügung. Deshalb sind die Zahl der Verarbeitungsschritte und die jeweiligen Prozessbedingungen zu berücksichtigen. Die Zusammensetzung enthält also nach thermischer Verarbeitung auch immer bestimmte Mengen an oxidiertem Phosphin, insbesondere bevorzugt Triphenylphosphinoxid.

Im Rahmen der vorliegende Erfindung geeignete Thermo- bzw. Verarbeitungsstabilisatoren sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butylphenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1 ,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos® 168 (Tris(2,4-di-tert-butyl-phenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

Im Rahmen der vorliegenden Erfindung können auch Kombinationen der oben aufgezählten Stabilisatoren eingesetzt werden, besonders eine Kombination aus TPP und Irganox®1076, weiter bevorzugt im Verhältnis 1:1.

### Komponente H)

Geeignete Flammschutzmittel im Sinne der vorliegenden Erfindung sind unter anderem Alkali- bzw. Erdalkalisalze von aliphatischen bzw. aromatischen Sulfonsaeure- Sulfonamid- und Sulfonimidderivaten z.B. Kaliumperfluorbutansulfonat, Kaliumdiphenyl-sulfonsulfonat, N-(p-tolylsulfonyl-)-p-toluolsulfimid-Kaliumsalz, N-(N'-Benzylaminocabonyl)-sulfanylimid-Kaliumsalz.

Salze die gegebenenfalls in den erfmdungsgemaessen Formmassen verwendet werden können, sind beispielsweise: Natrium- oder Kaliumperfluorbutansulfat, Natrium- oder Kaliumperfluormethansulfonat, Natrium oder Kaliumperfluoroctansulfat, Natrium-oder Kalium-2,5-dichlorbenzolsulfat, Natrium- oder Kalium-2,4,5-trichlorbenzolsulfat, Natrium- oder Kaliummethylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium-oder Kalium-2,4-dichlorbenzoat, Lithium-phenylphosphonat, Natrium- oder Kalium-diphenylsulfon-sulfonat, Natrium- oder Kalium-2-formylbenzolsulfonat, Natrium- oder Kalium-(N-benzolsulfonyl)-benzolsulfonamid. Trinatrium- oder Trikalium-hexafluoroaluminat, Dinatrium- oder Dikaliumhexafluorotitanat, Dinatrium- oder Dikalium-hexafluorosilikat, Dinatrium- oder Dikaliumhexafluorozirkonat, Natrium- oder Kalium-pyrophosphat, Natrium- oder Kalium-metaphosphat, Natrium- oder Kalium-tetrafluoroborat, Natrium- oder Kalium-hexafluorophosphat, Natrium- oder Kalium- oder Lithiumphosphat, N-(p-tolylsulfonyl-)-p-toluolsulfimid-Kaliumsalz, N-(N'-Benzyl¬aminor-carbonyl)-sulfanylimid-Kaliumsalz.

Bevorzugt werden Natrium- oder Kaliumperfluorbutansulfat, Natrium- oder Kaliumperfluoroctansulfat, Natrium- oder Kalium-diphenylsulfon-sulfonat und Natrium oder Kalium-2,4,6-trichlorbenzoat und N-(p-tolylsulfonyl-)-p-toluolsulfimid-Kaliumsalz, N-(N'-Benzylaminocabonyl)-sulfanylimid-Kaliumsalz. Ganz besonders bevorzugt sind Kalium-nonafluor-1-butansulfonat und Natrium- oder Kalium-diphenylsulfonsulfonat. Kalium-nona-fluor-1-butansulfonat ist u.a. als Bayowet®C4 (Firma Lanxess, Leverkusen, Deutschland, CAS-Nr. 29420-49-3), RM64 (Firma Miteni, Italien) oder als 3M™ Perfluorobutanesulfonyl Fluoride FC-51 (Firma 3M, USA) kommerziell erhältlich. Ebenfalls sind Mischungen der genannten Salze geeignet.

Im Rahmen der vorliegenden Erfindung werden die oben genannten Flammschutzmittel vorzugsweise in Mengen von 0,00 Gew.-% bis 0,15 Gew.-%, bevorzugt von 0,001 bis 0,1300 Gew.-%, weiter bevorzugt 0,010 bis 0,100 Gew.-%, besonders bevorzugt 0,020 bis 0,070 Gew.-%, mindestens eines Flammschutzmittels,

Als alternative Flammschutzmittel kommen z.B. phosphorhaltige Flammschutzmittel ausgewählt aus den Gruppen der Mono- und oligomeren Phosphor- und Phosphon¬säure¬ester, Phosphonatamine, Phosphonate, Phosphinate, Phosphite, Hypophosphite, Phosphinoxide und Phosphazene, wobei auch Mischungen von mehreren Komponenten ausgewählt aus einer oder verschiedenen dieser Gruppen als Flammschutzmittel zum Einsatz kommen können in Frage. Auch andere hier nicht speziell erwähnte vorzugsweise halogenfreie Phosphorverbindungen können alleine oder in beliebiger Kombination mit anderen vorzugsweise halogenfreien Phosphorverbindungen eingesetzt werden. Hierzu zählen auch rein anorganische Phosphorverbindungen wie Borphosphathydrat. Des weiteren kommen als phosphorhaltige Flammschutzmittel Phosphonatamine in Betracht. Die Herstellung von Phosphonataminen ist beispielsweise in US-Patentschrift 5,844,028 beschrieben. Phosphazene und deren Herstellung sind beispielsweise in EP A 728 811, DE A 1 961668 und WO 97/40092 beschrieben. Auch können Siloxane, phosphorylierte Organosiloxane, Silicone oder Siloxysilane als Flammschutzmittel Verwendung finden, was beispielsweise in der EP 1 342 753, in der DE 10257079A sowie in der EP 1 188 792 näher beschrieben wird.

Ferner kann als alternatives Flammschutzmittel Bisphenol-A-diphosphat eingesetzt werden, das u.a. als Reofos® BAPP (Firma Chemtura, Indianapolis, USA), NcendX® P-30 (Firma Albemarle, Baton Rouge, Louisiana, USA), Fyrolflex® BDP (Firma Akzo Nobel, Arnheim, Niederlande) oder CR 741® (Firma Daihachi, Osaka, Japan) kommerziell erhältlich ist.

Weitere Phosphorsäureester, die im Rahmen der vorliegenden Erfindung als zusätzliche Flammschutzmittel eingesetzt werden können, sind zudem Triphenylphosphat, welches unter anderem als Reofos® TPP (Firma Chemtura), Fyrolflex® TPP (Firma Akzo Nobel) oder Disflamoll® TP (Firma Lanxess) angeboten wird und Resorcindiphosphat. Resorcoindiphosphat läßt sich als Reofos RDP (Firma Chemtura) oder Fyrolflex® RDP (Firma Akzo Nobel) käuflich erwerben.

Im Rahmen der vorliegenden Erfindung werden die Phosphorverbindungen vorzugsweise zusätzlich in Mengen von 1 Gew.% bis 7 Gew.%, bevorzugt 1 Gew.% bis 6 Gew.%, besonders bevorzugt 2 Gew.% bis 6 Gew.%, jeweils bezogen auf die Gesamtzusammensetzung, eingesetzt.

Weitere geeignete alternative oder zu den oben genannten zusätzliche Flammschutzmittel im Sinne der vorliegenden Erfindung sind halogenhaltige Verbindungen. Hierzu zählen bromierte Verbindungen wie bromierte Oligocarbonate (z.B. Tetrabrombisphenol-A oligocarbonat BC-52®, BC-58®, BC-52HP® der Firma Chemtura), Polypentabrombenzylacrylate (z.B. FR 1025 der Firma Dead Sea Bromine (DSB)), oligomere Umsetzungsprodukte aus Tetrabrom-bisphenol-A mit Expoxiden (z.B. FR 2300 und 2400 der Firma DSB), oder bromierte Oligo- bzw. Polystyrole (z.B. Pyro-Chek® 68PB der Firma Ferro Corporation, PDBS 80 und Firemaster® PBS-64HW der Firma Chemtura).

Im Rahmen der vorliegenden Erfindung werden zusätzliche bromhaltige Verbindungen in Mengen von 0,01 Gew.% bis 5,00 Gew.%, bevorzugt 0,1 Gew.% bis 3,0 Gew.%, besonders bevorzugt 0,5 Gew.% bis 2,0 Gew.%, eingesetzt.

### Komponente I)

Die Zusammensetzung kann weitere handelsübliche Zusatzstoffe gemäß Komponente I) Fließmittel, Nukleiermittel, Stabilisatoren, Antistatika (beispielsweise Leitruße, Carbonfasern, Carbon Nanotubes sowie organische Antistatika wie Polyalkylenether, Alkyl-Sulfonate oder Polyamid-haltige Polymere), Säuren. Solche Verbindungen werden z. B. in den entsprechenden Kapiteln des "Plastics Additives Handbook" , ed. Hans Zweifel, 5th Edition 2000, Hanser Publishers, Munich beschrieben.

### Komponente K)

Beispiele von organischen Pigmenten, die als Zuschlagstoffe zur Verfärbung verwendet werden, sind Antrachinon-, Azo-, Azomethin-, Benzanthron-, Chinacridon-, Chinophthalon-, Dioxazin-, Flavanthron-, Indanthron-, Isoindo-lin-, Isoindolinon-, Methin-, Perinon-, Perylen-, Phthalocyanin-, Pyranthron-, Pyrrolopyrrol-, Thioindigopigmente sowie Metallkomplexe von z.B. Azo-, Azomethin-, Methinfarbstoffen oder Metalhsalzen von Azoverbindungen.

Als polymerlösliche Farbstoffe eignen sich beispielsweise Dispersionsfarbstoffe, wie solche der Anthrachinonreihe, beispielsweise Alkylamin-, Amino-, Arylamino-, Cyclo¬hexylamino-, Hydroxy-, Hydroxyamino- oder Phenylmercapto-anthra¬chinone, sowie Metallkomplexe von Azofarbstoffen, insbesondere 1:2-Chrom- oder Kobalt-komplexe von Monoazofarbstoffen, sowie Fluorezenzfarbstoffe, zum Beispiel solche aus der Benzthiazol-, Cumarin-, Oxarin-, oder Thiazinreihe.

Vorzugsweise enthalten die Zusammensetzungen der vorliegenden Erfindung mindestens ein Farbmittel ausgewählt aus der Gruppe, die umfaßt:
a) Macrolex Violett 3R (CAS-Nr. 0000082-16-6), 1,8-bis((4methylphenyl)amino)-9,10-Anthracendion, MW: 418,494
b) Macrolex Gelb 3G (CAS-Nr. 004174-09-8), MW: 358,3992,
c) Macrolex Blau RR (CAS-Nr. 032724-62-2), 1,4-bis((2,6-diethyl-4-methylphenyl)amino)-9,10-Anthracendion, MW: 530,708,
d) Heliogen Blau K6911 D (CAS-Nr. 000147-14-8), Kupferphthalocyanin,
e) Macrolex Orange 3G (CAS-Nr. 006925-69-5), MW: 270,29,
f) Makrolex Violett B (CAS-Nr. 81-48-1).

Weiter bevorzugt werden die Farbstoffe a, f und d verwendet, besonders bevorzugt in einer Kombination von a und/oder f mit d, und ganz besonders bevorzugt im Verhältnis von 1:1 bis 1:6 von a und/oder f zu b.

Methoden zur Herstellung der erfindungsgemäßen Polymer-Zusammensetzungen sind dem Fachmann bekannt.

Die Herstellung der erfindungsgemäßen Polymer-Zusammensetzungen enthaltend die Komponenten a) bis k) erfolgt mit gängigen Einarbeitungsverfahren durch Zusammenführung, Vermischen und Homogenisieren, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Komponenten der erfindungsgemäßen Zusammensetzung durch bekannte Verfahren, wie unter anderem als Masterbatch, eingebracht werden.

Die Verwendung von Masterbatchen sowie von Pulvermischungen oder kompaktierten Vormischungen ist insbesondere zum Einbringen der Komponenten b) bis einschließlich k) geeignet.

Besonders bevorzugt erfolgt die Einarbeitung der Komponenten b), c), e), g) und h) in Form einer Pulvermischung, wobei die Pulvermischung zusätzlich pulverförmige Komponente a) enthält.

In einer besonderen Ausführungsform können die oben genannten Komponenten zu einem Masterbatch dosiert werden, vorzugsweise die Komponenten d) und f) in a) als Trägermaterial, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, daß die Komponenten besser in der Polymermatrix verteilt werden. Zur Herstellung des Masterbatches wird als Polymermatrix bevorzugt der thermoplastische Kunststoff gewählt, der auch die Hauptkomponente der letztlichen Polymer-Gesamtzusammensetzung darstellt.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die erfindungsgemäßen Polymer-Zusammensetzungen können zu Erzeugnissen oder Formkörpern verarbeitet werden, in dem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammenhang beispielsweise durch Heißpressen, Spinnen, Blasformen, Tiefziehen, Extrudieren oder Spritzgießen in Erzeugnisse, Formkörper oder geformte Gegenstände überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten aus Basis- und optionaler Deckschicht / optionalen Deckschichten (Mehrschichtsysteme) können durch (Co)extrusion, Direct Skinning, Direct Coating, Insert Moulding, Folienhinterspritzen, oder sonstige dem Fachmann bekannte geeignete Verfahren hergestellt werden.

Zur Extrusion wird die gegebenenfalls z.B. mittels Trocknung vorbehandelte Polymer-Zusammensetzung dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion der Polymer-Zusammensetzung notwendigen Temperaturen eingestellt, wobei üblicherweise den Herstellerangaben gefolgt werden kann. Enthalten die Polymerzusammensetzungen beispielsweise Polycarbonate mit hoher Schmelzeviskosität, so werden diese normalerweise bei Schmelzetemperaturen von 260 °C bis 350 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 238 und EP-A 0 716 919, für Details des Adapter- und Düsenverfahrens siehe Johannaber/Ast:"Kunststoff Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Mit den oben beschriebenen thermoplastischen Substraten lassen sich Formkörper auch durch Spritzguss herstellen. Die Verfahren hierzu sind bekannt und im "Handbuch Spritzgiessen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Erfindungsgemäß bevorzugte Erzeugnisse, Formkörper oder geformte Gegenstände sind Platten, Folien, Verscheibungen, beispielsweise Luftfahrzeuge, Autosonnendächer, Sicherheitsscheiben, Bedachungen oder Gebäudeverglasungen, Visiere, Brillen. Dabei können neben Massivplatten auch Doppelstegplatten oder Multistegplatten verwendet werden. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben, Metallstifte oder ähnliches aufweisen, die zur Befestigung oder Führung (bei Falt- oder Schiebedächern) der Bedachungselemente dienen können. Ferner können weitere Materialien mit den erfindungsgemäßen Zusammensetzungen verbunden werden, z.B. im 2-Komponenten-Spritzguss. So kann das entsprechende Bauteil mit IR-absorbierenden Eigenschaften mit einem Rand versehen werden, welcher z.B. dem Verkleben dient.

In einer besonderen Ausführungsform werden die Artikel aus der Zusammensetzung der vorliegenden Erfindung beschichtet. Diese Beschichtung dient dem Schutz des thermoplastischen Materials gegenüber allgemeinen Witterungseinflüssen (z.B. Schädigung durch Sonnenlicht) sowie gegenüber mechanischer Beeinträchtigung der Oberfläche (z.B. Verkratzen) und erhöht somit die Beständigkeit der entsprechend ausgerüsteten Artikel. Ferner kann eine Beschichtung auch die Beschlagsneigung verringern, was insbesondere bei Brillen und Visieren von Interesse ist.

Es ist bekannt, dass Polycarbonat gegenüber UV-Strahlung mittels verschiedener Beschichtungen geschützt werden kann. Üblicherweise enthalten diese Beschichtungen UV-Absorber. Diese Schichten erhöhen ebenso die Kratzfestigkeit des entsprechenden Artikels. Die Artikel aus der vorliegenden Erfindung können Einschicht oder Mehrschichtsysteme tragen. Sie können ein- oder beidseitig beschichtet sein. In einer bevorzugten Ausführungsform enthält der Artikel einen Kratzfestlack enthaltend UV-Absorber. In einer besonderen Ausführungsform enthält das Mehrschichterzeugnis mindestens eine Schicht enthaltend die erfindungsgemäße Zusammensetzung, mindestens eine UV-Schutzschicht und optional eine Kratzfestbeschichtung. Bei Verscheibungsmaterialien trägt der Artikel mindestens eine Kratzfest- bzw. Antireflexbeschichtung auf mindestens einer Seite.

Die Herstellung der Beschichtung, z.B. einer Anti-Reflexbeschichtung, kann über verschiedene Methoden erfolgen. Beispielsweise kann über verschiedene Methoden des Aufdampfens, z.B. über Elektronenstrahlverfahren, Widerstandserhitzung sowie über Plasmaabscheidung oder verschiedener Sputtermethoden wie Hochfrequenz-Sputtern, Magnetron-Sputtern, Ionenstrahl-Sputtern usw., Ionenplattieren mittels DC-, RF-, HCD-Methoden, Reaktiv-Ionenplattieren usw. oder chemischer Gasphasenabscheidung eine Beschichtung erfolgen. Ferner kann eine Antireflexbeschichtung auch aus Lösung aufgebracht werden. So kann über eine Dispersion eines Metalloxids mit hohen Brechungsindex wie ZrO₂, TiO₂ Sb₂O₅ oder WO₃ in einen Silicon-basierten Lack eine entsprechende Beschichtungslösung hergestellt werden, welche zur Beschichtung von Kunstoffartikeln geeignet ist und thermisch oder UV-gestützt ausgehärtet werden kann.

Es sind verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können über beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein. Ferner können IR-Absorber organischer oder anorganischer Natur enthalten sein. Diese Additive können im Kratzfestlack selbst oder in der Primerschicht enthalten sein. Die Dicke der Kratzfestschicht beträgt 1 - 20 µm, bevorzugt 2 - 15 µm .Unterhalb von 1 µm ist die Beständigkeit der Kratzfestschicht ungenügend Oberhalb von 20 µm treten häufiger Risse im Lack auf. Das erfindungsgemäße Basismaterial, welches in der vorliegenden Erfindung beschrieben wird, wird bevorzugt nach Fertigstellung des Spritzgussartikels mit einer oben beschriebenen Kratzfest- und/oder Antireflexschicht versehen, da der bevorzugte Einsatzbereich im Bereich von Fenster- oder- Automobilverscheibung liegt.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 130 °C eingesetzt - häufig nach dem ein Großteil des Lösemittels kurzzeitig bei Raumtemperatur entfernt wurde. Kommerziell erhältliche Systeme sind z.B. SHP470, SHP470FT und SHP401 der Firma Momentive Performance Materials. Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-.Absorber. Sie werden bevorzugt über Tauch- oder Fließverfahren aufgebracht. Die Aushärtung erfolgt bei Temperaturen von 50 °C - 130 °C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden Diese sind z.B. in EP0570165 oder WO 2008/071363 oder DE 2804283 beschrieben. Kommerziell erhältlich Hybrid-Systeme sind z.B. unter den Namen PHC587 oder UVHC 3000 von Momentive Performance Materials erhältlich.

In einem besonders bevorzugtem Verfahren erfolgt die Applikation des Lackes über das Flutverfahren, da es zu beschichteten Teilen mit hoher optischer Qualität führt.

Im Rahmen der vorliegenden Erfindung umfaßt der UV-Bereich (Ultraviolett) den Wellenlängenbereich von 200 - 400 nm, visueller (sichtbarer) Bereich den Wellenlängenbereich von 400 - 780 nm und IR-Bereich (Infrarot) den Wellenlängenbereich von 780 - 1400 nm.

Unter Transparenz versteht man im Sinne der vorliegenden Erfindung, dass man den Hintergrund bei Durchsicht durch das transparente Material, z.B. in Form eines entsprechenden Formkörpers, deutlich erkennen kann. Bloße Lichtdurchlässigkeit wie z.B. bei Milchglas, durch welches der Hintergrund nur unscharf erscheint, genügt nicht, um das entsprechende Material als transparent zu bezeichnen.

Überraschenderweise konnte die Aufgabe durch Zusammensetzungen gemäß Anspruch 1 der vorliegenden Erfindung gelöst werden.

Ferner ist es erforderlich die Farbgebung des Formkörpers in einer Farbe zu gestalten, die die Erkennung von Signalfarben in engen Toleranzen ermöglicht, da häufig durch die Färbung zur Schweißerschutzverglasung diese Farben nicht mehr auffallend wahrgenommen werden.

Der Formkörper ist transparent und hat eine Anfangstrübung vor Beschichtung von weniger als 3,0 %, bevorzugt 2,5 %, insbesondere bevorzugt weniger als 2,0 %.

Die Größe der Partikel kann z.B.mit Hilfe der Transmissionselektronenspektroskopie (TEM) bestimmt werden. Derartige Messungen an IR-Absorber-Nanopartikeln sind z.B. in Adachi et al., J. Am. Ceram. Soc. 2008, 91, 2897-2902, beschrieben.

Die Bestimmung des Schmelzvolumenrate (MVR) erfolgt nach ISO 1133 (bei 300 °C; 1,2 kg).

Die Bestimmung der Farbe in Transmission erfolgt mit einem Lambda 900 Spektralphotometer der Firma Perkin Elmer mit Photometerkugel in Anlehnung an ASTM E1348 mit den in der ASTM E308 beschriebenen Gewichtungsfaktoren und Formeln.

### Transmissionsmessungen:

Die Transmissionsmessungen wurden an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission).

Die Transmissionsmessungen wurden an einem Lambda 900 Spektralphotometer der Firma Perkin Einer mit Photometerkugel durchgeführt. Alle Werte wurden bei Wellenlängen von 320 nm bis einschließlich 2300 nm mit Δλ 5nm bestimmt. Die Transmissionen einzelner Spektralbreiche (UV- , sichtbarer- und IR-Bereich) sind die gemittelten Messwerte dieser Messungen

Die Messung des relativen visuellen Schwächungskoeffizienten für die Signallichterkennung erfolgt nach EN 1836 an einem Lambda 900 Spektralphotometer der Firma Perkin Elmer mit Photometerkugel.

Die **Trübung** wurde bestimmt nach ASTM D 1003 mit einem BYK Gardner Haze Gard

Die Bestimmung der **Kerbschlagzähigkeit** erfolgt gemäß ISO 180 A durch eine 10-fach-Bestimmung an Prüfstäben der Abmessung 80 mm x 10 mm x 3 mm. Die Messung erfolgt bei einer Temperatur von 23°C.

### Materialien zur Herstellung der Probekörper:

### Komponente A)

Lineares Bisphenol-A-Polycarbonat mit Endgruppen basierend auf Phenol mit einer Schmelze-Volumenrate (MVR) von 6 cm³/10 min, gemessen bei 300 °C und 1,2 kg Belastung gemäß ISO 1133), nachfolgend als PC 1 bezeichnet.

### Komponente B)

B1)Tinuvin326
B2) Tinuvin 329

### Komponente C)

Pentaerythrittetrastearat

### Komponente D)

D1) Lanthanhexaborid, LaB₆ (KHDS 06 der Firma Sumitomo Metal Mining, Japan, CAS-No. 857255-66-4). Das Produkt liegt in Form einer pulverförmigen Dispersion vor. Die Gewichtsangaben in den Beispielen beziehen sich auf das Produkt KHDS 06, wobei der Feststoffgehalt an Lanthanhexaborid in der eingesetzten kommerziellen KHDS 06-Dispersion 21,5 Gew.-% beträgt.
D2) Lanthanhexaborid, LaB₆ (KHDS 872G2 der Firma Sumitomo Metal Mining, Japan, CAS-No. 949005-03-2). Das Produkt liegt in Form einer pulverförmigen Dispersion vor. Die Gewichtsangaben in den Beispielen beziehen sich auf das Produkt KHDS 872G2, wobei der Feststoffgehalt an Lanthanhexaborid in der eingesetzten kommerziellen KHDS 872G2 Dispersion 10,0 Gew.-% beträgt.
D3) Als IR-Absorber wird Cäsiumwolframat, Cs0,33W03, (YMDS 874 der Firma Sumitomo Metal Mining, Japan) eingesetzt. Das Produkt liegt in Form einer Acrylat-Dispersion vor. Die Gewichtsangaben in den Beispielen beziehen sich auf das Cäsiumwolframat als Reinstoff, wobei der Feststoffgehalt an Cäsiumwolframat in der eingesetzten kommerziellen Dispersion 25 Gew% beträgt.

### Komponente E)

Als organischer IR-Absorber wird Lumogen IR 765 (ein Quaterrylen, CAS-No. 943969-69-5) der Firma BASF SE, 67065 Ludwigshafen, Deutschland verwendet.

### Komponente F)

Als nanoskaliger Ruß (Partikelgröße ca. 17 nm) werden Black Pearls® 800 (CAS-No. 1333-86-4) der Firma Cabot Corp. eingesetzt.

### Komponente G)

G1) Triphenylphosphin (TPP)
G2) Irganox 1076

### Komponente K)

K1) Macrolex Violett 3R
K2) Macrolex Gelb 3G
K3) Macrolex Blau RR
K4) Heliogen Blau K6911 D
K5) Macrolex Orange 3G

### Herstellung der Polymerzusammensetzungen durch Compoundierung:

Die Compoundierung der Additive erfolgte auf einem Zweiwellenextruder der Firma KraussMaffei Berstorff, TYP ZE25, bei einer Massetemperatur von 300°C und einer Drehzahl von 100 Upm bei einem Durchsatz von 10kg/h mit der in den Beispielen angegebenen Mengen an Komponenten. Hierbei wird zunächst zur besseren Vermischung eine Pulvermischung aus PC (A) (5 Gew.-% Pulvermischung bezogen auf die Gesamtzusammensetzung) enthaltend Komponenten B) bis G) angefertigt und zur Restpolycarbonatmenge (A) dosiert.

### Herstellung der Prüfkörper:

Das Granulat wird bei 120 °C für 4 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 80 °C zu Farbmusterplatten mit den Abmessungen 50 mm x 75 mm x Z mm) verarbeitet; Z ist dabei 1,0; 2,0; 3,0 bzw. 4,0 mm; für den Kerbschlag bei gleichen Temperaturen zu Prüfkörpern der Maße: 80 x 10 x 3,0 mm³.

Die Zusammensetzungen der vorliegenden Erfindung erfühlen die Schweißerschutznormen EN 169 in den Klassen 1.2 bis 9.0 in Wandstärken von 1,0 mm bis 4,0 mm. Darüber hinaus erfüllen die Zusammensetzungen in den genannten Wandstärken die Anforderungen der EN 1836 mit einem Schwächungskoeffizienten von 0,80 bis 1,31 in den Signalfarben gelb, rot , grün und blau gleichermaßen.

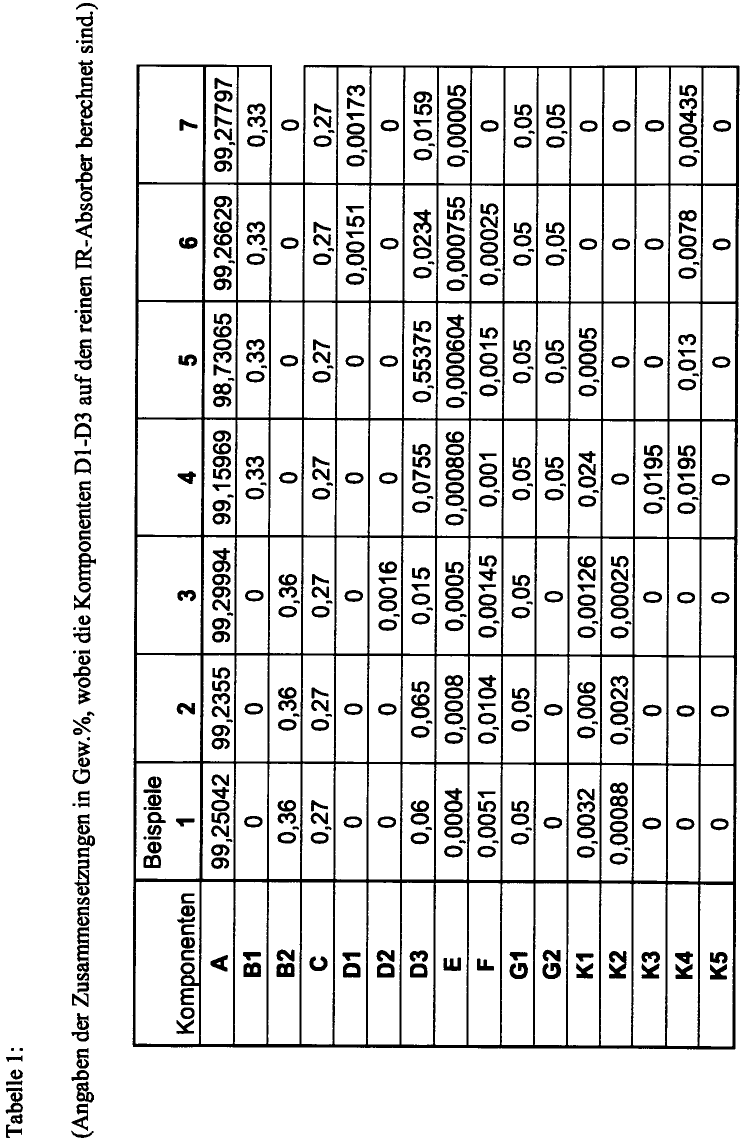

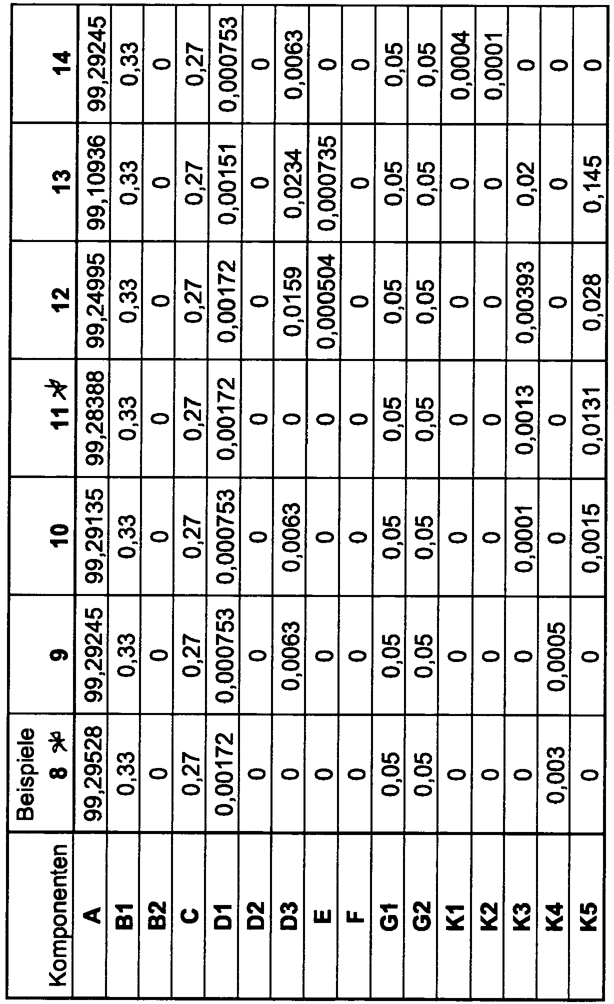

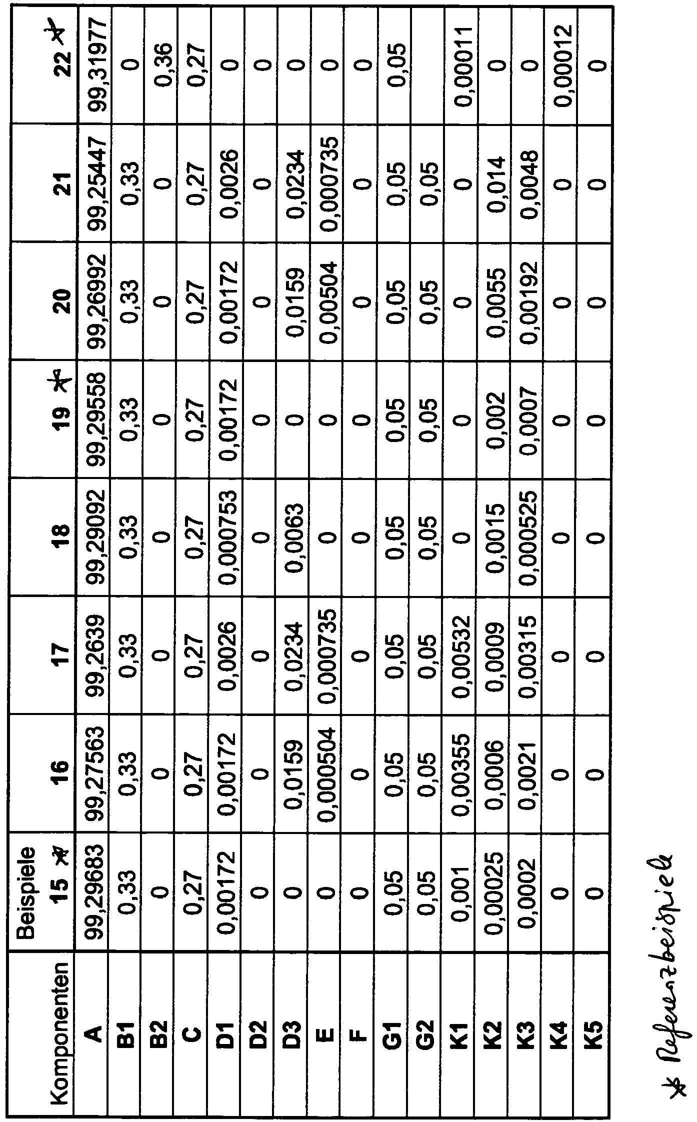

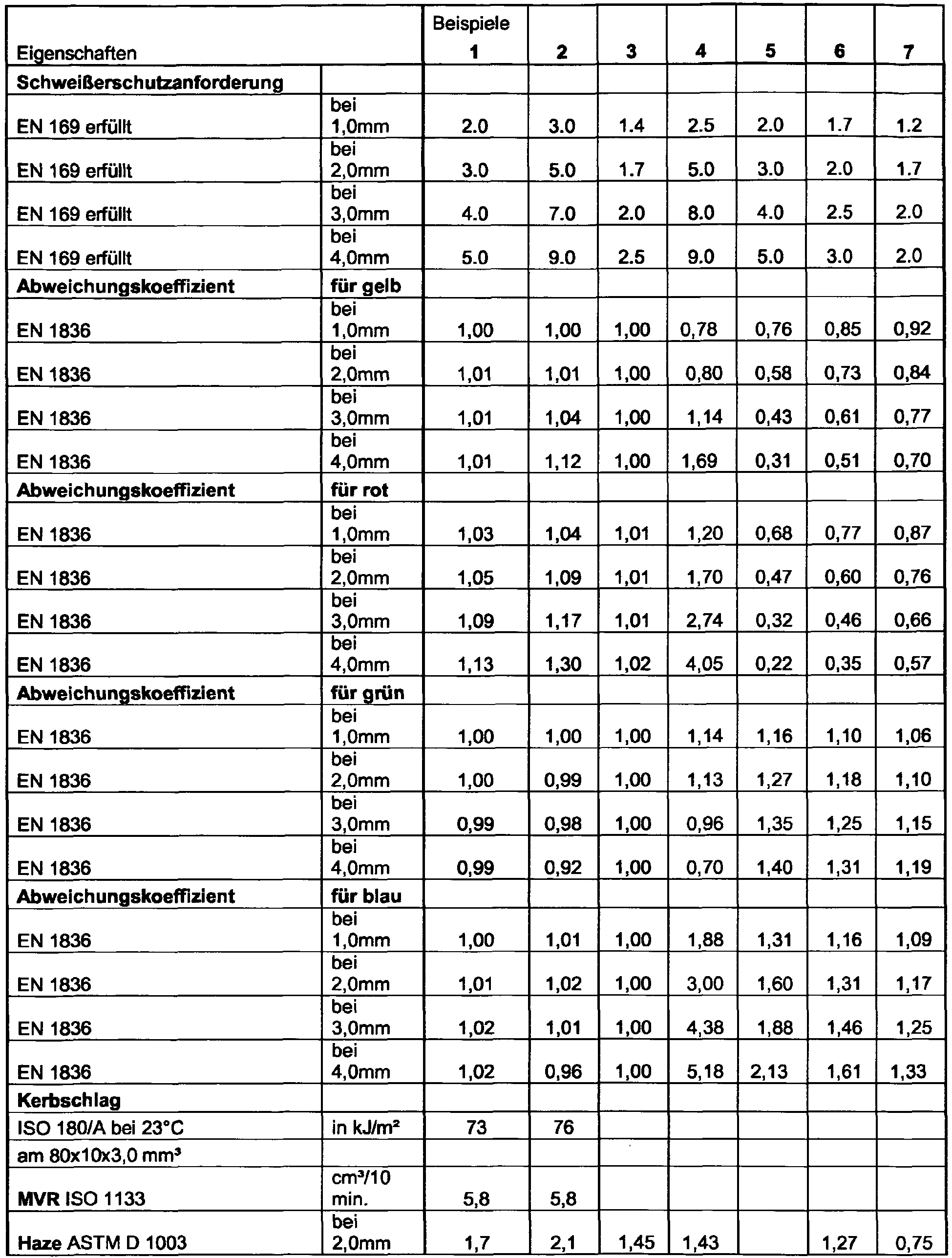

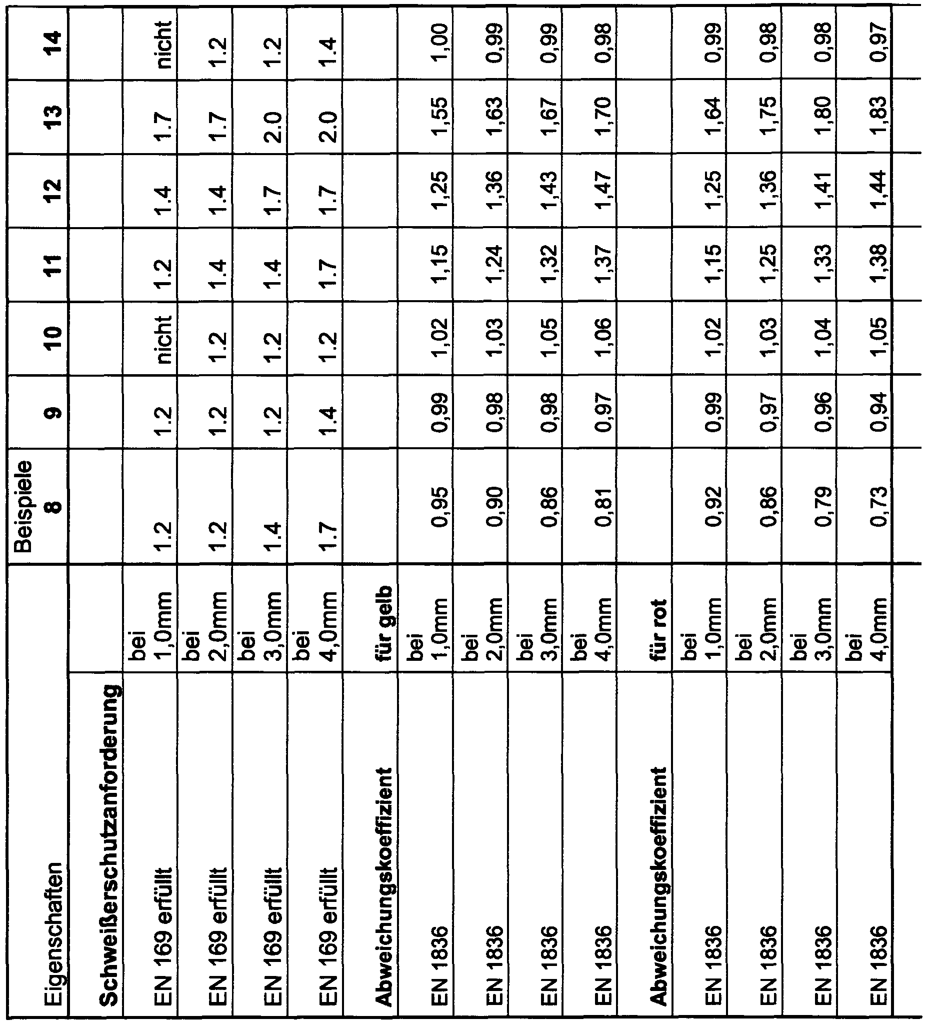

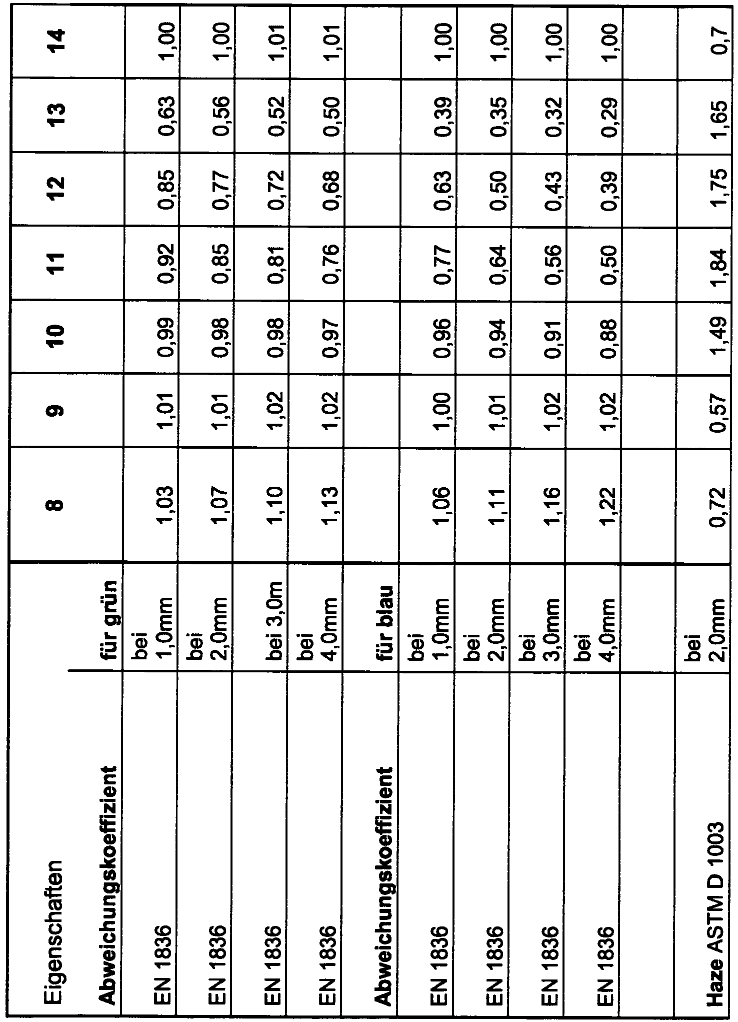

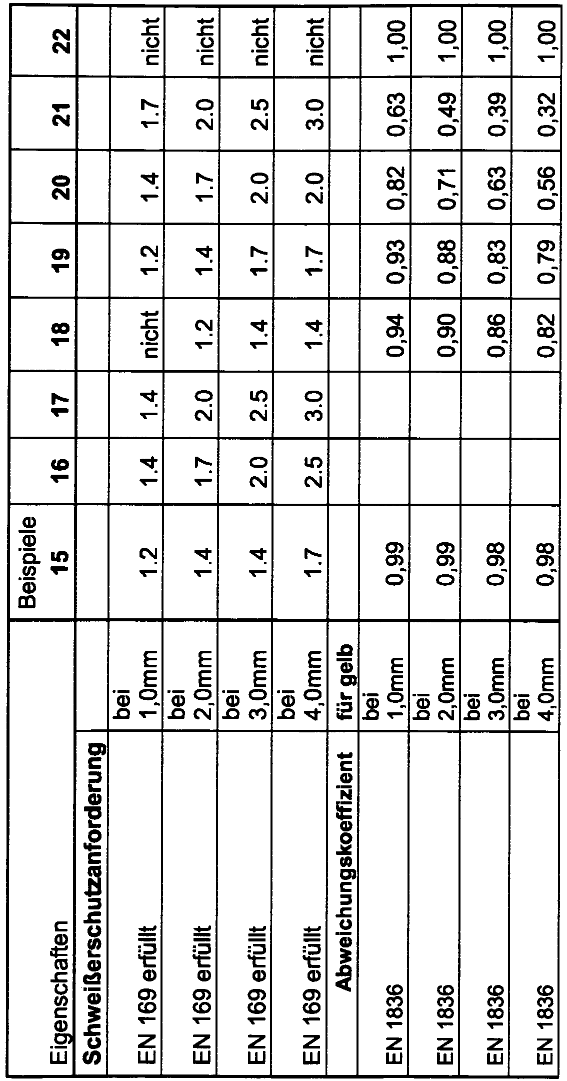

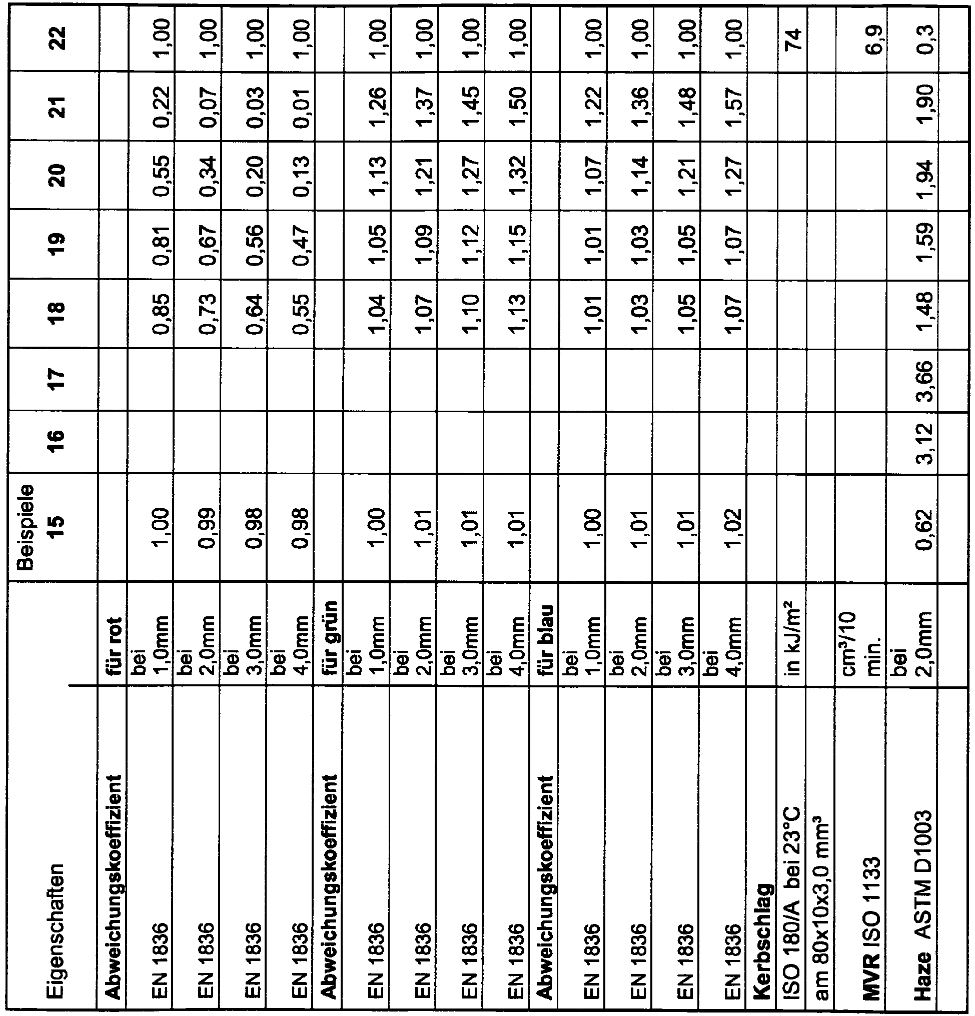

## Patentansprüche

1. Wärme absorbierende thermoplastische Formmasse enthaltend
A) 73,9750 bis 99,9948 Gew.-% mindestens eines transparenten thermoplastischen Kunststoffs,
B) 0,05 bis 0,50 Gew.-% mindestens eines UV-Stabilisators,
C) 0 Gew.-% bis 1,00 Gew.-% mindestens eines Entformungsmittels,
D) 0,0001 bis 0,500 Gew.-% mindestens eines anorganischen IR-Absorbers, ausgewählt aus mindestens einem Wolframat oder einer Mischung mindestens eines Borids und mindestens eines Wolframats,
E) 0,0001 bis 0,01 Gew.-% mindestens eines organischen IR-Absorbers aus der Gruppe der Quaterylene, Perylene, Phthalocyanine und Naphthalocyanine,
F) 0,0001 bis 0,0150 Gew.-% Ruß,
G) 0 bis 1,0 Gew.-% mindestens eines Thermostabilisators,
H) 0 bis 7,0 Gew.-% mindestens eines Flammschutzmittels,
I) 0 - 15,00 Gew.-% weitere Additive,
K) 0,0001 bis 1,000 Gew.-% mindestens eines organischen Farbmittels oder organischen Farbmittelkomplexes,
wobei die Menge der Komponenten A bis K sich zu 100 Gew.-% addiert.

2. Formmasse nach Anspruch 1, **dadurch gekennzeichnet, dass** der thermoplastische Kunststoff Polycarbonat ist.

3. Formmasse nach Anspruch 1 oder 2, **dadurch gekennzeichnet, dass** das organische Farbmittel ausgewählt ist aus der Gruppe, die Macrolex Violett 3R, Macrolex Gelb 3G, Macrolex Blau RR, Heliogen Blau K6911 D und Macrolex Orange 3G umfasst.

4. Formmasse nach einem der Ansprüche 1 bis 3, **dadurch gekennzeichnet, dass** als anorganischer IR-Absorber eine Mischung aus mindestens eine Borid und mindestens einem Wolframat verwendet wird und das Verhältnis von Borid zu Wolframat von 1:6 bis 1:12 beträgt.

5. Formmasse nach einem der vorhergehenden Ansprüche, **dadurch gekennzeichnet, dass** die Zusammensetzung Ruß in einem Anteil von 0,0001 bis 0,0130 Gew.-% enthält.

6. Formmasse nach einem der Ansprüche 1 - 5, **dadurch gekennzeichnet, dass** die Zusammensetzung einen organischen IR-Absorber in einem Anteil von 0,0001 bis 0,0080 Gew.-% enthält.

7. Formmasse nach einem der vorhergehenden Ansprüche, **dadurch gekennzeichnet, dass** der Thermostabilisator ausgewählt ist aus der Gruppe, die Triphenylphosphin und Irganox 1076 umfasst, wobei die Thermostabilisatoren in einem Anteil von 0,01 bis 0,50 Gew.-% enthalten sind.

8. Formmasse nach einem der vorhergehenden Ansprüche, **dadurch gekennzeichnet, dass** die organischen Farbmittel in einem Anteil von 0,0004 bis 0,2000 Gew.-% enthalten sind.

## Claims

1. Heat-absorbing thermoplastic moulding composition comprising
A) from 73.9750 to 99.9948 wt.% of at least one transparent thermoplastic polymer,
B) from 0.05 to 0.50 wt.% of at least one UV stabiliser,
C) from 0 wt.% to 1.00 wt.% of at least one demoulding agent,
D) from 0.0001 to 0.500 wt.% of at least one inorganic IR absorber, selected from at least one tungstate or a mixture of at least one boride and at least one tungstate,
E) from 0.0001 to 0.01 wt.% of at least one organic IR absorber from the group of the quaterrylenes, perylenes, phthalocyanines and naphthalocyanines,
F) from 0.0001 to 0.0150 wt.% of carbon black,
G) from 0 to 1.0 wt.% of at least one heat stabiliser,
H) from 0 to 7.0 wt.% of at least one flame retardant,
I) from 0 to 15.00 wt.% of further additives,
K) from 0.0001 to 1.000 wt.% of at least one organic dye or organic dye complex,
wherein the sum of the amounts of components A to K is 100 wt.%.

2. Composition according to claim 1, **characterised in that** the thermoplastic polymer is polycarbonate.

3. Composition according to claim 1 or 2, **characterised in that** the organic dye is selected from the group comprising Macrolex Violet 3R, Macrolex Yellow 3G, Macrolex Blue RR, Heliogen Blue K6911 D and Macrolex Orange 3G.

4. Composition according to any one of claims 1 to 3, **characterised in that** a mixture of at least one boride and at least one tungstate is used as the inorganic IR absorber and the ratio of boride to tungstate is from 1:6 to 1:12.

5. Composition according to any one of the preceding claims, **characterised in that** the composition comprises carbon black in an amount of from 0.0001 to 0.0130 wt.%.

6. Composition according to any one of claims 1 to 5, **characterised in that** the composition comprises an organic IR absorber in an amount of from 0.0001 to 0.0080 wt.%.

7. Composition according to any one of the preceding claims, **characterised in that** the heat stabiliser is selected from the group comprising triphenylphosphine and Irganox 1076, the heat stabilisers being present in an amount of from 0.01 to 0.50 wt.%.

8. Composition according to any one of the preceding claims, **characterised in that** the organic dyes are present in an amount of from 0.0004 to 0.2000 wt.%.

## Revendications

1. Matière à mouler thermoplastique absorbant la chaleur, contenant :
A) 73,9750 à 99,9948 % en poids d'au moins un plastique thermoplastique transparent,
B) 0,05 à 0,50 % en poids d'au moins un stabilisateur UV,
C) 0 % en poids à 1,00 % en poids d'au moins un agent de démoulage,
D) 0,0001 à 0,500 % en poids d'au moins un absorbeur IR inorganique, choisi parmi au moins un tungstate ou un mélange d'au moins un borure et d'au moins un tungstate,
E) 0,0001 à 0,01 % en poids d'au moins un absorbeur IR organique du groupe constitué par les quaterylènes, les pérylènes, les phtalocyanines et les naphtalocyanines,
F) 0,0001 à 0,0150 % en poids de noir de carbone,
G) 0 à 1,0 % en poids d'au moins un thermostabilisateur,
H) 0 à 7,0 % en poids d'au moins un agent ignifuge,
I) 0 à 15,00 % en poids d'additifs supplémentaires,
K) 0,0001 à 1,000 % en poids d'au moins un colorant organique ou un complexe colorant organique,
la somme des quantités des composants A à K étant de 100 % en poids.

2. Matière à mouler selon la revendication 1, **caractérisée en ce que** le plastique thermoplastique est un polycarbonate.

3. Matière à mouler selon la revendication 1 ou 2, **caractérisée en ce que** le colorant organique est choisi dans le groupe comprenant Macrolex violet 3R, Macrolex jaune 3G, Macrolex bleu RR, Heliogen bleu K6911 D et Macrolex orange 3G.

4. Matière à mouler selon l'une quelconque des revendications 1 à 3, **caractérisée en ce qu'**un mélange d'au moins un borure et d'au moins un tungstate est utilisé en tant qu'absorbeur IR inorganique et le rapport entre le borure et le tungstate est de 1:6 à 1:12.

5. Matière à mouler selon l'une quelconque des revendications précédentes, **caractérisée en ce que** la composition contient un noir de carbone en une proportion de 0,0001 à 0,0130 % en poids.

6. Matière à mouler selon l'une quelconque des revendications 1 à 5, **caractérisée en ce que** la composition contient un absorbeur IR organique en une proportion de 0,0001 à 0,0080 % en poids.

7. Matière à mouler selon l'une quelconque des revendications précédentes, **caractérisée en ce que** le thermostabilisateur est choisi dans le groupe comprenant la triphénylphosphine et Irganox 1076, les thermostabilisateurs étant contenus en une proportion de 0,01 à 0,50 % en poids.

8. Matière à mouler selon l'une quelconque des revendications précédentes, **caractérisée en ce que** les colorants organiques sont contenus en une proportion de 0,0004 à 0,2000 % en poids.
